# EUROPEAN PATENT SPECIFICATION

(11) **EP 2 457 724 B1**
(45) Date of publication and mention of the grant of the patent: **29.06.2016**
(21) Application number: 10802104.9
(22) Date of filing: 24.02.2010
(51) Int. Cl.: B32B 5/02, B32B 5/24, B32B 7/12, B32B 27/12, B32B 27/32, B32B 27/34, D03D 15/12, D06M 15/256, D06M 15/564, D06N 3/00, D06N 3/14, A41D 31/00

(54) **WATERPROOF MOISTURE-PERMEABLE SHEET WITH FIRE PROTECTION PERFORMANCE AND FIRE-PROTECTING CLOTHING USING SAME**
WASSERFESTE FEUCHTIGKEITSDURCHLÄSSIGE FOLIE MIT FEUERSCHUTZFUNKTION UND FEUERSCHUTZBEKLEIDUNG DAMIT
FEUILLE PERMÉABLE À L'HUMIDITÉ IMPERMÉABLE À L'EAU AVEC PERFORMANCE DE PROTECTION CONTRE L'INCENDIE ET VÊTEMENT IGNIFUGÉ L'UTILISANT

(30) Priority: 21.07.2009 JP 2009169833
(43) Date of publication of application: 30.05.2012
(73) Proprietor: The Japan Wool Textile Co., Ltd., Hyogo 650-0037 (JP); SABIC Global Technologies B.V., 4612 PX Bergen op Zoom (NL)
(72) Inventor: TAKAHASHI, Masanobu, Osaka 541-0048 (JP); WASHIYAMA, Shigeo, Tokyo 104-0033 (JP)
(74) Representative: Golding, Louise Ann
(86) International application number: PCT/JP2010/052861
(87) International publication number: WO 2011/010483

(56) References cited:
- EP-A1- 1 939 339
- WO-A1-2009/014007
- WO-A1-2009/014007
- WO-A2-01/02163
- DE-A1-102007 050 175
- JP-A- H08 507 732

## Description

### Technical Field

The present invention relates to a fire-protecting waterproof moisture-permeable sheet and fireproof clothing using the same.

### Background Art

Waterproof moisture-permeable sheets have been applied widely, for example to fire-fighting clothing; clothing for ambulance crews, survival equipment, clothing for offshore operations, waterproof clothing for armies, rainwear, clothing for sports, mountaineering tools, gloves, caps/hats and the like. A fire-protecting waterproof moisture-permeable sheet is used in particular for an interlayer waterproof sheet for fireproof clothing such as fire-fighting clothing, for example. Since fibrous materials for the interlayer waterproof sheet are required to have strength and heat resistance, a para-aramid fiber is used in general therefor. However, the para-aramid fiber is problematic in that it has poor light resistance and undergoes photodegradation when exposed to sunlight, exhibiting an immediate loss of strength and suffering discoloration. Therefore, blending with a meta-aramid fiber or the like has been proposed for securing light resistance (Patent Documents 1 and 2).

However, even if a para-aramid fiber and a meta-aramid fiber are blended as proposed in Patent Document 1, the problems still remain, namely, the para-aramid fiber present on the surface undergoes photodegradation when exposed to sunlight, immediately loses strength, and experiences discoloration. In the case of a blended yarn in particular, since respective fibers that constitute the spun yarn are moved outward and inward within the yarn due to a phenomenon called migration, degradation that has occurred in exposed portions results in deterioration in the strength of the entire yarn. Moreover, an ordinary multilayer-structured spun yarn is also problematic in that the core fiber and the cover fiber separate and a high-tenacity yarn is not likely to be obtained. There is also a problem that both the para-aramid fiber and the meta-aramid fiber are difficult to dye, and due to the necessity of using a spun-dyed yarn, the degree of freedom in forming a color pattern is restricted.

EP 1939339 discloses a two-layer fabric suitable as heat-resistant protective clothing for e.g. firefighters, in which a heat-resistant flame-retardant base cloth is reinforced with an inner reinforcing cloth. The base cloth, which is formed on the upper side of the two-layer fabric, comprises a mixture of 30-95% of a flame-retardant fiber and 5-70% of a heat-resistant, high-strength fiber.

JP 2007 077537 discloses a heat-resistant protective clothing comprising a blended product of 20-50% of a para-aramid fiber having a determined fiber size, and 50-80% of a heat resistant fiber, e.g. polyetherimide fiber.

DE 10 2007 050175 discloses a laminate for flame retardant protective clothing, comprising an aramid woven fabric joined to a water-vapor-permeable and waterproof porous membrane of expanded PTFE. The outer surface of the aramid layer is coated with a dyed silicone to provide for a warning function. An aramid woven fabric coated with such a dyed silicone is said to meet the norm EN 533-1997 with index 3, i.e. no flame propagation, no hole formation, no burning drips, no afterglow, and no after burning time greater than 2 seconds occurs during inflammation in the material. The laminate where a coated silicone woven aramid layer is joined to an expanded PTFE is also said to meet EN 532 with index 3.

### Prior Art Documents

### Patent documents

Patent document 1: JP 2007-077537 A
Patent document 2: JP 2008-101294 A

### Disclosure of Invention

### Problem to be Solved by the Invention

In order to address the aforementioned problems of the conventional art, the present application provides a fire-protecting waterproof moisture-permeable sheet having excellent light resistance and heat resistance, and preferable dye-affinity, and that can be produced at a low cost. The present application also provides fireproof clothing using the fire-protecting waterproof moisture-permeable sheet.

### Means for Solving Problem

The invention provides the use of a fire-protecting, waterproof, moisture-permeable sheet as an interlayer waterproof fabric in fireproof clothing as claimed in claim 1.

Fireproof clothing of the present invention is characterized in that it includes the fire-protecting waterproof moisture-permeable sheet as an interlayer waterproof fabric for fireproof clothing.

### Effects of the Invention

The present invention can provide a fire-protecting waterproof moisture-permeable sheet that has excellent light resistance and heat resistance and preferable dye-affinity and also can be produced at a low cost, and fireproof clothing using the same, since the base sheet is at least one fiber sheet selected from the group consisting of a woven or knitted fabric formed from fibers which are uniformly blended and spun to form a yarn, and a uniformly blended non-woven fabric, and including 60-95 mass% of a polyetherimide fiber and 5 to 40 mass% of another flame-retardant fiber. Namely, the above-mentioned effect is obtainable since the sheet is based on the polyetherimide fiber having excellent light resistance and heat resistance. Moreover, since the polyetherimide fiber has a desirable dye-affinity, the fabric based on the fiber also has a desirable dye-affinity

### Brief Description of Drawings

[FIG. 1] FIG. 1 is s cross-sectional view showing a fire-protecting waterproof moisture-permeable sheet in one example of the present invention.
[FIG. 2] FIG. 2 is s cross-sectional view showing a fire-protecting waterproof moisture-permeable sheet in another example of the present invention.

### Description of the Invention

In the present invention, 'waterproof moisture-permeable' denotes a nature of not passing liquid water but allowing gaseous water (steam, moisture) to permeate. A fire-protecting waterproof moisture-permeable sheet of the present invention is made of 60 to 95 mass% of a polyetherimide fiber and 5 to 40 mass% of another flame-retardant fiber. It is preferable that the polyetherimide single fiber has a fineness of not more than 3.9 decitex (3.5 deniers) and more preferably not more than 2.8 decitex (2.5 deniers). When the fineness is not more than 3.9 decitex (3.5 deniers), the fiber has flexibility and a desirable feeling, and it can be applied suitably to an inner liner for fireproof clothing. A preferable average fiber length of the polyetherimide fiber is in a range of 30 to 220 mm, and more preferably, in a range of 80 to 120 mm, and particularly preferably in a range of 90 to 110 mm. The polyetherimide fiber having the fiber length in the above range can be spun easily. In a case of using the polyetherimide fiber and the other flame-retardant fiber, a fiber sheet is formed from a uniformly blended product. For the fiber sheet, a woven fabric, a knitted fabric or a nonwoven fabric is used. Further, the polyetherimide fiber can be dyed with a disperse dye, and thus it can be dyed to have various colors just like polyester. Dyeing can be carried out as yarn-dyeing (dyeing of fibers or yarns) or piece-dyeing (dyeing of cloths).

60 to 95 mass% of the polyetherimide fiber and 5 to 40 mass% of the other flame-retardant fiber are blended and spun. The other flame-retardant fiber is preferably at least one fiber selected from the group consisting of wool, frame-retardant rayon, frame-retardant acrylic, aramid, flame-retardant cotton and flame-retardant vinylon.

Hereinafter, the respective fibers will be described.

### 1. Polyetherimide fiber

An example of the polyetherimide fiber is "Ultem" manufactured by Sabic Innovative Plastics (limiting oxygen index (LOI): 32). This fiber has a tensile strength of about 3 cN/decitex.

### 2. Other flame-retardant fiber

(1) Wool: commonly-used merino wool or the like can be used. The wool can be used in a natural state or it can be dyed. Alternatively, wool that has been modified by for example removing the surface scales for shrink proofing can be used. The natural or dyed wool is called "unmodified wool". The scale removal itself is a commonly known process for shrink proofing, and it is performed by chlorination. Such an unmodified or modified wool is used to improve hygroscopicity and to shield a radiant heat so that the comfort in wearing is kept preferable despite wetting from sweat during exertion under a high-temperature and strenuous environment, thereby exhibiting heat resistance for protecting the human body. The above-mentioned effect can be obtained also by using wool that has been subjected to a ZIRPRO process (a process with titanium and zirconium salt). This process developed by the International Wool Standard Secretariat is well known as a process for providing flame-retardance to wool.
(2) Flame-retardant rayon: examples of flame-retardant rayon include a rayon that has been subjected to a PROBAN process (an ammonium curing process using tetrakis hydroxymethyl phosphonium salt developed by Albright & Wilson Ltd.), a rayon that has been subjected to a Pyrovatex CP process (process with N-methylol dimethylphosphonopropionamide developed by Ciba-Geigy), and "Viscose FR" (trade name) manufactured by Lenzing AG in Austria.
(3) Flame-retardant acrylic: examples of the flame-retardant acrylic fiber include a modacrylic fiber "Protex M" manufactured by Kaneka Corporation (limiting oxygen index (LOI): 32), trade name "Rufnen" manufactured by the former Kanebo Corporation/Marutake Co. Ltd., and the like. These fibers have a tensile strength of about 2 to 3 cN/decitex.
(4) Flame-retardant cotton: examples of flame-retardant cotton include a cotton that has been subjected to a PROBAN process (an ammonium curing process using tetrakis hydroxymethyl phosphonium salt developed by Albright & Wilson Ltd.), and a cotton that has been subjected to a Pyrovatex CP process (process with N-methylol dimethylphosphonopropionamide developed by Ciba-Geigy).
(5) Flame-retardant vinylon: examples of the flame-retardant vinylon include "Bainal" (trade name) manufactured by Kuraray Co., Ltd.
(6) Aramid: for an aramid fiber, any of a para-aramid fiber and a meta-aramid fiber can be used in the present application. The para-aramid fiber has high tensile strength (for example, "Technora" manufactured by Teijin, Ltd., 24.7 cN/decitex; "Kevlar" manufactured by DuPont, 20.3 to 24.7 cN/decitex). In addition, the thermal decomposition starting temperature is high (about 500°C for both of the above products) and the limiting oxygen index (LOI) is in a range of 25-29, and thus the products can be used preferably for a heat-resistant fabric and heat-resistant protective suits. It is preferable that the single-fiber fineness of the para-aramid fiber is in a range of 1 to 6 decitex, and more preferably, in a range of 2 to 5 decitex. Examples of the meta-aramid fiber include "Conex" manufactured by Teijin, Ltd. (limiting oxygen index (LOI): 30) and "Nomex" manufactured by DuPont (limiting oxygen index (LOI): 30), and they have a tensile strength of about 4 to 7 cN/decitex.

For making a blended yarn, according to a usual spinning method, the fibers are blended in steps such as carding, roving, drafting or any other preceding steps so as to manufacture a spun yarn. The spun yarn can be used as a single yarn or a plurality of yarns can be twisted together. These yarns are used as warps and wefts to provide a woven fabric. Examples of the woven fabric include a plain weave, twill weave, and satin weave. In particular, for the interlayer waterproof fabric of the fireproof clothing, the plain weave, the twill weave or the satin weave, which tend not to hold water, are used preferably. The plain weave has a flat surface and thus it can be laminated easily to a waterproof moisture-permeable film. In a case of knitted fabric, any of flat knitting, circular knitting, and warp knitting can be applied. There is no particular limitation on the knitted texture. When air is to be included in the knitted fabric, a double linkage pile fabric is formed. For forming a nonwoven fabric, for example, a card web is formed, which may be subjected to a process such as needle-punching, water jet treatment, stitch bonding and embossing as required.

Any usual sewing can be used for sewing the fire-protecting waterproof moisture-permeable sheet of the present invention in order to make an interlayer waterproof fabric of fireproof clothing. In this context, the interlayer waterproof fabric is arranged between the outermost layer and a layer closest to the body

It is preferable that the weight per unit (metsuke) of the fire-protecting waterproof moisture-permeable sheet is in a range of 40 to 300 g/m², so that lighter and more comfortable working clothing can be provided. It is more preferable that the range is 100 to 250 g/m², and particularly preferably 140 to 200 g/m².

The fire-protecting waterproof moisture-permeable sheet has the below-mentioned properties, i.e., flame resistance, heat resistance and wash resistance under ISO 11613-1999 as the international performance standards for fireproof clothing: (1) flame resistance to be free from hole formation, dripping and melting; and to have afterflame time and afterglow time of not more than 2 seconds; (2) heat resistance to be free from firing, separation, dripping and melting; and to have a shrinkage rate of not more than 5%; and (3) washing resistance to have a shrinkage rate of not more than 3%. Thereby, the interlayer fabric of fireproof clothing shields a radiant heat so that the wearer's comfort is maintained despite wetting from sweat during exertion under a high-temperature and strenuous environment, thereby exhibiting heat resistance for protecting the human body

An antistatic fiber further is added to the fabric. This is to inhibit the charging of the fabric when the final product is in use. Examples of the antistatic fiber include a metal fiber, a carbon fiber, a fiber in which metallic particles and carbon particles are mixed, and the like. The antistatic fiber preferably is added in a range of 0.1 to 1 mass% relative to the spun yarn, and more preferably in a range of 0.3 to 0.7 mass%. The antistatic fiber may be added at the time of weaving. For example, 0.1 to 1 mass% of "Beltron" manufactured by KB Seiren Ltd., a carbon fiber or a metal fiber may be added.

In the present invention, the fiber sheet and the waterproof moisture-permeable film may be laminated directly or may be laminated by using an adhesive. In a case of a direct lamination, one surface of the fiber sheet is impregnated with liquid polyurethane and then dried. In this case, the polyurethane layer makes the waterproof moisture-permeable film. It is preferable that a flame retardant is added in advance to the waterproof moisture-permeable film and/or the adhesive layer. For the flame retardant, any arbitrary flame retardant such as a phosphorus-nitrogen based flame retardant (for example, "Pekoflam STC" manufactured by Clariant in Japan) and a bromine-based flame retardant (for example, hexabromocyclododecane) can be used. The content of the flame retardant is preferably 1 to 20 mass% when the dry mass weight of the polyurethane composition is 100 mass%. In a case of lamination by use of an adhesive, the fiber sheet and for example a polytetrafluoroethylene (PTFE) porous film are laminated to each other with a polyurethane-based adhesive. The polyurethane-based adhesive may be a liquid or a hot-melt type. It is preferable that the above-mentioned flame retardant is added in advance to the polyurethane-based adhesive. The fiber sheet of the present invention contains a high proportion of polyetherimide fiber, and thus it is highly compatible with a polyurethane-based adhesive and/or a polyurethane-based moisture-permeable film so as to allow an easy adhesion.

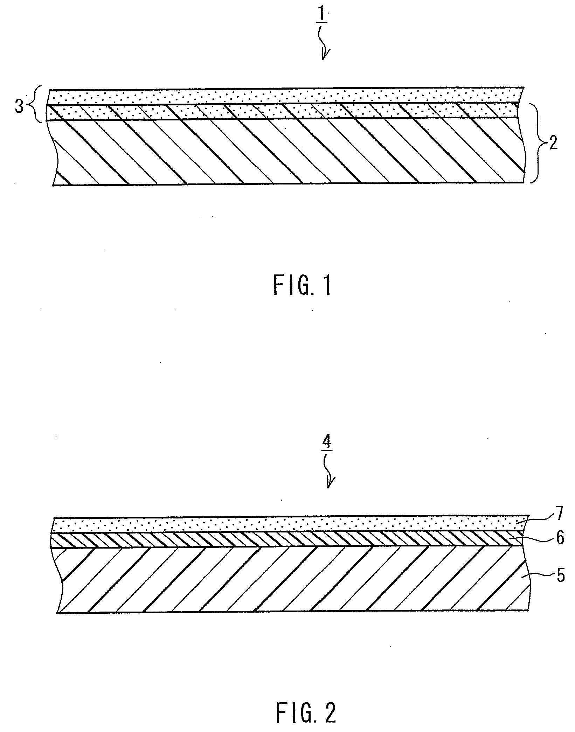

Hereinafter, examples will be described with reference to attached sheets. FIG. 1 is a cross-sectional view showing a fire-protecting waterproof moisture-permeable sheet 1 according to an example of the present invention. A surface of a fiber sheet 2 is impregnated with liquid polyurethane 3 (waterproof moisture-permeable film) and dried to make a fire-protecting waterproof moisture-permeable sheet 3 (hereinafter, this process is called also "polyurethane coating method"). FIG. 2 is a cross-sectional view showing a fire-protecting waterproof moisture-permeable sheet 4 in another example of the present invention. A fiber sheet 5 and for example a polytetrafluoroethylene (PTFE) porous film 7 (waterproof moisture-permeable film) are laminated to each other with a polyurethane-based adhesive layer 6 so as to make a fire-protecting waterproof moisture-permeable sheet 4 (hereinafter, this process is called also "PTFE lamination method").

### EXAMPLES

The present invention will be described below in further detail by way of Examples. The measurement method used in the Examples and Comparative Examples of the present invention are as follows.

### (1) Flame resistance

In accordance with EN 532-1995 specified in ISO 11613-1999 as the international performance standards, a flame was adjusted using the required burner and was brought into contact horizontally with a laminate of fabrics oriented vertically, and the burner was positioned with its top end to be separated 17 mm from the fabrics.

### (2) Heat resistance

Heat resistance at the time of heating at 180°C for 5 minutes was measured in accordance with ISO 11613-1999, Annex A specified in ISO 11613-1999 as the international performance standards.

### (3) Washing resistance

The fabric was washed five times in accordance with ISO 6330-1984, 2A-E specified in ISO 11613-1999 as the international performance standards.

### (4) Burn resistance

In a case where the measurement result was no hole formation, no dripping and no melting and where the afterflame time and afterglow time were 0 seconds, the char length created by bringing a flame of a Bunsen burner into contact for 12 seconds with the lower end of a woven fabric sample oriented vertically, the afterflame time after the flame was removed, and the afterglow time, were measured according to the method specified in JIS L1091A-4.

### (5) Electrification voltage test

The voltage immediately after electrification was measured according to the method for a frictional electrification attenuation measurement specified in JIS L1094 5.4.

### (6) Other physical properties

The other physical properties were measured in accordance with JIS or the industry standards.

### (Reference Example 1)

### 1. Fibers

A spun yarn was manufactured by using 99.5 mass% of a polyetherimide fiber and 0.5 mass% of an antistatic fiber. For the polyetherimide fiber, "Ultem" manufactured by Sabic Innovative Plastics (limiting oxygen index (LOI): 32; a single-fiber fineness: 3.3 decitex (3 deniers) and average fiber lengths: 76 mm, 89 mm, and 102 mm) was used. The ratios of the polyetherimide fibers of the respective average lengths were 1:1:1. For the antistatic fiber, "Beltron" manufactured by KB Seiren Ltd., having a single-fiber fineness of 5.6 decitex (5 deniers) and an average fiber length of 89 mm was used.

### 2. Manufacture of spun yarn

The fibers were introduced separately into a card so as to open the fibers and to make a fibrous web, which then was blended using a sliver. The blended yarns were subjected to a fore-spinning step and a fine spinning step, thereby a spun yarn having a metric count of 60 (two-fold yarn) (2/60), and a S twist of 93 times/10cm and a Z twist of 64 times/10cm was manufactured to be used as the warp. The weft was prepared from the same fibers in the same manner.

### 3. Fabrication of woven fabric

Using the spun yarns for the warp and the weft, a woven fabric having the plain weave texture was fabricated with a rapier loom. Then, the fabric was dyed to an olive-green color through a one-bath dyeing. A jet dyeing machine manufactured by Nissen Corporation was used as a dyeing machine, and dyes and other additives (Kayaron Polyester Yellow FSL (Nippon Kayaku Co., Ltd.) 3.60% o.w.f., Kayaron Red SSL (Nippon Kayaku Co., Ltd.) 0.36% o.w.f., Kayaron Polyester Blue SSL (Nippon Kayaku Co., Ltd.) 1.24% o.w.f., acetic acid (68 wt%) 0.0036% o.w.f., and sodium acetate 0.0067% o.w.f.) were added, and the dyeing treatment was carried out at 135°C for 60 minutes.

It was confirmed that according to ISO 11613-1999 as the international performance standards, this woven fabric exhibits the following properties. Namely, (1) flame resistance to be free from hole formation, dripping and melting; and to have afterflame time and afterglow time of not more than 2 seconds; (2) heat resistance to be free from firing, separation, dripping and melting; and to have a shrinkage rate of not more than 5%; and (3) washing resistance to have a shrinkage rate of not more than 3%. The physical properties and the testing methods are shown in Table 1.

**[Table 1]**

| Test item | | | Measure value | Testing method |
|---|---|---|---|---|
| Unit weight | Normal state | | 161.0 g/m² | JIS L 1096-8.4.2 |
| Pick density | | Warp | 235 number/10cm | JIS L 1096-8.6.1 |
| | | Weft | 212 number/10cm | |
| Tensile strength | | Warp | 551 N | JIS L 1096-8.12.1 a (method A) |
| | | Weft | 436 N | |
| Tensile elongation | | Warp | 74.3% | JIS L 1096-8.12.1 a (method A) |
| | | Weft | 62.2% | |
| Tear strength (A-2) | | Warp | 26.4 N | JIS L 1096-8.15.2 (method A-2) |
| | | Weft | 23.8 N | |
| Dimensional change (method C) | | Warp | 0.0% | JIS L 1096-8.64.4 (method C) |
| | | Weft | 0.0% | |
| Washing dimensional change | | | | ISO 11613-1999 |
| | 5 times | Warp | -0.5% | ISO 6330 2A-E |
| | 5 times | Weft | -0.5% | |
| | 5 times | Appearance | grades 4-5 | |
| Heat resistance | Shrinkage rate | Warp | -3.0% | ISO 11613-1999 Annex A |
| | | Weft | -3.0% | |
| Press shrinkage rate | | | | Method HESC103A |
| | Immediately after | Warp | -0.0% | |
| | hnmediately after | Weft | -0.3% | |
| | After balanced | Warp | 0.0% | |
| | After balanced | Weft | 0.1% | |
| | After humidification | Warp | 0.0% | |
| | After humidification | Weft | 0.3% | |
| | After immersion | Warp | 0.2% | |
| | After immersion | Weft | 0.3% | |
| Frictional electrification attenuation | | | | JIS L 1094.5.4 |
| | Immediately after | Warp | -1200 V | |
| | Immediately after | Weft | -1500 V | |
| Flame resistance | | | | ISO 11613-1999→in a case of afterflame•afterglow time of 0 second, JIS L 1091A-4 alternate method (Annex 8), year of 1992 flame contact: 12 seconds (vertical method) |
| | Char length | Warp | 10.5 cm | |
| | Char length | Weft | 11.0 cm | |
| | Afterflame | Warp | 0.0 sec. | |
| | Aftertlame | Weft | 0.0 sec. | |
| | Afterglow | Warp | 0.5 sec. | |
| | Afterglow | Weft | 0.4 sec. | |

4. Manufacture of fire-protecting waterproof moisture-permeable sheet (polyurethane coating method as shown in FIG. 1)

The woven fabric prepared in the above-mentioned manner was subjected to a wet-coating process by use of a polyurethane resin, obtaining a fire-protecting waterproof moisture-permeable sheet. For the polyurethane-based polymer, 100 mass% of polycarbonate-based polyurethane ("Resamine CU-9443" (trade name) manufactured by Dainichiseika Color & Chemicals Mfg. Co., Ltd.) (urethane: 30%), 3 mass% of a phosphorus-nitrogen based flame retardant ("Pekoflam STC" (trade name) manufactured by Clariant in Japan) and 60 mass% of dimethylformamide were mixed, thereby preparing a flame retardant adhesive. The composition was applied on the woven fabric by using a doctor blade so that the thickness in a dried state would be 40 µm, which was cured to obtain a fire-protecting waterproof moisture-permeable sheet. The physical properties of the thus obtained fire-protecting waterproof moisture-permeable sheet are described below.

### (1) Moisture permeability

According to JIS L1099 B-2 method (a base fabric surface, moisture-absorbent side), it was 167 g/m² • Hr. According to the same method (a film surface, moisture-absorbent side), it was 173 g/m² • Hr.

### (2) Waterproof property

According to JIS L1092 B method, it was 237 kPa (high hydrostatic pressure method, pressurized base fabric surface, without a perforated plate); 500 kPa or higher according to the same method (pressurized base fabric surface, with a perforated plate); 294 kPa according to the same method (pressurized film surface, without a perforated plate); and 500 kPa or higher according to the same method (pressurized film surface, with a perforated plate).

### (3) Flammability

Char length according to the JIS L 1091 A-4 method (1992, flame contact: 12 seconds, vertical method) was, longitudinal: 12.5 cm, horizontal: 12.0 cm; afterflame time, longitudinal: 0.0 sec, horizontal: 0.0 sec; afterglow time, longitudinal: 5.2 sec, horizontal: 3.3 sec.

The fire-protecting waterproof moisture-permeable sheet was sewn to prepare an interlayer waterproof fabric for fireproof clothing worn by a firefighter. The outermost layer of this fireproof clothing was provided in the following manner. Here, the core fiber was a para-aramid fiber (blend rate: 25.6 wt%), the cover fiber was composed of a meta-aramid fiber (blend rate: 74.0 wt%) and the antistatic fiber (blend rate: 0.4 wt%). For the core fiber, "Technora" manufactured by Teijin, Ltd., which is a stretch breaking yarn composed of a black spun-dyed product having a single-fiber fineness of 1.7 decitex (1.5 deniers), a fiber length of 37 to 195 mm (average fiber length: 106 mm), a metric count of 125 (single yarn, and a Z twist was used. The cover fiber used here was a bias-cut product of "Conex", a meta-aramid fiber manufactured by Teijin, Ltd., having a single-fiber fineness of 2.2 decitex (2 deniers) and a fiber length of 76 to 102 mm (average fiber length: 89 mm). As the antistatic fiber, "Beltron" manufactured by KB Seiren Ltd., having a single-fiber fineness of 5.5 decitex (5 deniers) and an average fiber length of 89 mm was blended in the cover fiber. The blended fibers were spun with a ring spinning frame. The extent of overfeeding of the cover fiber bundle relative to the core fiber bundle was 7%. The direction of twist was the same as that of the stretch breaking yarn. The direction of twist and the twist number were the Z direction and 630 T/m (a twist number 1.4 times greater than the twist number of the stretch breaking yarn), respectively. The spun yarn thus obtained had a metric count of 32, and a breaking tenacity of 1019 N. The thus obtained multilayer-structured spun yarn was processed into a two-fold yarn, and in this instance a twist of 600 T/m was applied in the twist direction of S (yarn count/twist number: 2/32). Using this two-fold yarn, a plain-woven fabric having a warp density of 196 yarns/10 cm, a weft density of 164 yarns/10 cm, and a unit weight of 229.5 g/m² was obtained. It was confirmed that according to ISO 11613-1999 as the international performance standards, this woven fabric exhibits the following properties. Namely, (1) flame resistance to be free from hole formation, dripping and melting; and to have afterflame time and afterglow time of not more than 2 seconds; (2) heat resistance to be free from firing, separation, dripping and melting; and to have a shrinkage rate of not more than 5%; and (3) washing resistance to have a shrinkage rate of not more than 3%. The thus obtained woven fabric was fabricated to an outermost layer.

As materials for an inner liner, short fibers of 84.5 mass% of a polyetherimide fiber, 15.0 mass% of wool and 0.5 mass% of an antistatic fiber were blended. For the polyetherimide fiber, "Ultem" manufactured by Sabic Innovative Plastics (limiting oxygen index (LOI): 32; a single-fiber fineness: 3.3 decitex (3 deniers) and average fiber length: 89 mm) was used. For the wool, an unmodified merino wool produced in Australia (average fiber length: 75 mm) was used. For the antistatic fiber, "Beltron" manufactured by KB Seiren Ltd., having a single-fiber fineness of 5.6 decitex (5 deniers) and an average fiber length of 89 mm was used. The fibers were introduced separately into a card so as to open the fibers and to make a fibrous web, which then was blended using a sliver. The blended yarns were subjected to a fore-spinning step and a fine spinning step, and thereby a spun yarn having a metric count of 80 (two-fold yarn) (2/80), and a S twist of 68 times/10cm and a Z twist of 85 times/10cm was manufactured to be used as the warp. The weft was prepared from the same fibers in the same manner. Using the spun yarns for the warp and the weft, a woven fabric having the honeycomb weave texture was fabricated with a rapier loom. Each honeycomb was shaped as a rectangle about 5 mm in length and about 3 mm in width, and it forms a three-dimensional pattern about 1 mm in depth. It was confirmed that according to ISO 11613-1999 as the international performance standards, that this woven fabric exhibits the following properties. Namely, (1) flame resistance to be free from hole formation, dripping and melting; and to have afterflame time and afterglow time of not more than 2 seconds; (2) heat resistance to be free from firing, separation, dripping and melting; and to have a shrinkage rate of not more than 5%; and (3) washing resistance to have a shrinkage rate of not more than 3%. This woven fabric was fabricated to an inner liner.

Fireproof clothing applied with an interlayer waterproof fabric in this manner shielded a radiant heat so that the wearer's comfort was maintained despite wetting from sweat during exertion under a high-temperature and strenuous environment, thereby exhibiting heat resistance for protecting the human body.

### (Reference Example 2)

Fireproof clothing was manufactured in the same manner as Example 1 except that the woven fabric obtained in Example 1 was provided with a fire-protecting waterproof moisture-permeable sheet manufactured by the PTFE lamination method as shown in FIG. 2. First, for the polyurethane-based polymer, 100 mass% of polycarbonate-based polyurethane ("Resamine CU-9443" (trade name) manufactured by Dainichiseika Color & Chemicals Mfg. Co., Ltd.) (urethane: 30%), 3 mass% of a phosphorus-nitrogen based flame retardant ("Pekoflam STC" (trade name) manufactured by Clariant in Japan) and 60 mass% of dimethylformamide were mixed, thereby preparing a flame retardant adhesive. The composition was applied on a stretched porous polytetrafluoroethylene (PTFE) film (thickness: 30 µm) by using a doctor blade so that the thickness in a dried state would be 20 µm, on which the woven fabric obtained in the above-mentioned manner was placed, laminated by use of a pair of lamination rollers so as to cure the adhesive layer, thereby obtaining a fire-protecting waterproof moisture-permeable sheet. The physical properties of the thus obtained fire-protecting waterproof moisture-permeable sheet are described below.

### (1) Moisture permeability

According to JIS L1099 B-2 method (a base fabric surface, moisture-absorbent side), it was 501 g/m²•Hr. According to the same method (a film surface, moisture-absorbent side), it was 196 g/m²•Hr.

### (2) Waterproof property

According to JIS L1092 B method, it was 120 kPa (high hydrostatic pressure method, pressurized base fabric surface, without a perforated plate); 289 kPa or higher according to the same method (pressurized base fabric surface, with a perforated plate); 210 kPa according to the same method (pressurized film surface, without a perforated plate); and 500 kPa or higher according to the same method (pressurized film surface, with a perforated plate).

### (3) Flammability

Char length according to the JIS L 1091 A-4 method (1992, flame contact: 12 seconds, vertical method) was, longitudinal: 11.9 cm, horizontal: 11.0 cm; afterflame time, longitudinal: 0.0 sec, horizontal: 0.0 sec; afterglow time, longitudinal: 1.2 sec, horizontal: 1.1 sec.

Fireproof clothing applied with an interlayer waterproof fabric in this manner shielded a radiant heat so that the wearer's comfort was maintained despite wetting from sweat during exertion under a high-temperature and strenuous environment, thereby exhibiting heat resistance for protecting the human body.

### (Example 3)

A woven fabric was obtained similarly to Example 1 except for blending short fibers of 71.5 mass% of a polyetherimide fiber, 28.0 mass% of wool and 0.5 mass% of an antistatic fiber. Another exception is that the polyetherimide fiber was dyed in advance (yarn-dyeing) with a disperse dye under the dyeing condition as in Example 1 and the wool was dyed in advance (yarn-dyeing) with an acid dye according to a usual method. In a measurement according to ISO 11613-1999 as the international performance standards, the obtained woven fabric had the properties below:
(1) flame resistance to be free from hole formation, dripping and melting; and to have afterflame time and afterglow time of 0 second;
(2) heat resistance to be free from firing, separation, dripping and melting; and to have a shrinkage rate of 2.0%; and
(3) washing resistance to have a shrinkage rate of 2.0%. Namely, the quality was acceptable.

A fire-protecting waterproof moisture-permeable sheet was produced by the polyurethane-coating method as shown in FIG. 1 similarly to Example 1, and for which a moisture-permeability, waterproof property and flammability were measured to obtain similar results.

### (Comparative Example 1)

A fire-protecting waterproof moisture-permeable sheet was obtained similarly to Example 1 except for blending short fibers of 49.5 mass% of a polyetherimide fiber, 50 mass% of wool and 0.5 mass% of an antistatic fiber. Another exception is that the polyetherimide fiber was dyed in advance (yarn-dyeing) with a disperse dye under the dyeing condition as in Example 1 and the wool was dyed in advance (yarn-dyeing) with an acid dye according to a usual method. In a measurement according to ISO 11613-1999 as the international performance standards, the obtained woven fabric had the properties below:
(1) flame resistance to be free from hole formation, dripping and melting; and to have afterflame time and afterglow time of 0 second;
(2) heat resistance to be free from firing, separation, dripping and melting; and to have a shrinkage rate of 1.5%; and
(3) washing resistance to have a shrinkage rate of 4.5%. Namely, the product was rejected.

### (Example 4)

A fire-protecting waterproof moisture-permeable sheet was obtained similarly to Example 1 except for blending short fibers of 84.5 mass% of a polyetherimide fiber, 15.0 mass% of flame-retardant rayon: "Viscose FR" (trade name) manufactured by Lenzing AG (average fiber length: 75 mm, average fineness: 3.3 dtex), and 0.5 mass% of an antistatic fiber. In a measurement according to ISO 11613-1999 as the international performance standards, the obtained woven fabric had the properties below:
(1) flame resistance to be free from hole formation, dripping and melting; and to have afterflame time and afterglow time of 0 second;
(2) heat resistance to be free from firing, separation, dripping and melting; and to have a shrinkage rate of 1.5%; and
(3) washing resistance to have a shrinkage rate of 2.0%. Namely, the quality was acceptable.

A fire-protecting waterproof moisture-permeable sheet was produced by the polyurethane-coating method as shown in FIG. 1 similarly to Example 1, and for which a moisture-permeability, waterproof property and flammability were measured to obtain similar results.

### (Example 5)

A fire-protecting waterproof moisture-permeable sheet was obtained similarly to Example 1 except for blending short fibers of 84.5 mass% of a polyetherimide fiber, 15.0 mass% of a flame-retardant acrylic fiber: "Kanekaron (modacrylic)" (trade name) manufactured by Kaneka Corporation (average fiber length:100 mm, average fineness: 3.3 dtex), and 0.5 mass% of an antistatic fiber. In a measurement according to ISO 11613-1999 as the international performance standards, the obtained woven fabric had the properties below:
(1) flame resistance to be free from hole formation, dripping and melting; and to have afterflame time and afterglow time of 0 second;
(2) heat resistance to be free from firing, separation, dripping and melting; and to have a shrinkage rate of 3.0%; and
(3) washing resistance to have a shrinkage rate of 1.0%. Namely, the quality was acceptable.

A fire-protecting waterproof moisture-permeable sheet was produced by the polyurethane-coating method as shown in FIG. 1 similarly to Example 1, and for which a moisture-permeability, waterproof property and flammability were measured to obtain similar results.

### Industrial Applicability

The fire-protecting waterproof moisture-permeable sheet of the present invention can be applied not only to fire-fighting clothing but also widely to clothing for ambulance crews, survival equipment, clothing for offshore operations, waterproof clothing for armies, rainwear, clothing for sports, mountaineering tools, gloves, caps/hats and the like.

### Explanation of letters and numerals

- 1,4: Fire-protecting waterproof moisture-permeable sheet
- 2,5: Fiber sheet
- 3,7: Waterproof moisture-permeable film
- 6: Adhesive layer

## Claims

1. Use of a fire-protecting, waterproof, moisture-permeable sheet as an interlayer waterproof fabric in fireproof clothing, wherein said sheet is a laminate of at least one fiber sheet and a waterproof, moisture-permeable film, the fiber sheet being selected from the group consisting of a woven or knitted fabric formed from fibers which are uniformly blended and spun to form a yarn, and a uniformly blended non-woven fabric, and comprising 60 to 95 mass% of a polyetherimide fiber and 5 to 40 mass% of another flame-retardant fiber;
wherein the sheet further comprises an antistatic fiber; and
wherein a flame retardant is provided in the waterproof, moisture-permeable film or in an adhesive sheet which laminates the waterproof, moisture-permeable film to the fiber sheet;
the fire-protecting, waterproof, moisture-permeable sheet having flame resistance, heat resistance and wash resistance under ISO 11613-1999 as the international performance standards for fireproof clothing:
(1) flame resistance to be free from hole formation, dripping and melting; and to have afterflame time and afterglow time of not more than 2 seconds;
(2) heat resistance to be free from firing, separation, dripping and melting; and to have a shrinkage rate of not more than 5%; and
(3) washing resistance to have a shrinkage rate of not more than 3%.

2. Use according to claim 1, wherein
the flame-retardant fiber is at least one fiber selected from the group consisting of wool, flame-retardant rayon, flame-retardant acrylic, aramid, flame-retardant cotton and flame-retardant vinylon.

3. Use according to claim 1 or 2, wherein the antistatic fiber is a metal fiber, a carbon fiber, or a fiber in which metallic particles and carbon particles are mixed.

4. Use according to any one of claims 1 to 3, wherein the fiber sheet is either a woven fabric or a knitted fabric of a spun yarn.

5. Use according to any one of claims 1 to 4, wherein the fiber sheet and the waterproof, moisture-permeable film are laminated directly or by an adhesive layer.

6. Use according to any one of claims 1 to 5, wherein the waterproof, moisture-permeable film and/or the adhesive layer comprises a flame retardant which is a phosphorous-nitrogen based flame retardant or a bromine-based flame retardant.

7. Use according to any one of claims 1 to 6, wherein the polyetherimide fiber has a fineness of not more than 3.9 decitex (3.5 deniers).

8. Use according to any one of claims 1 to 7, wherein the polyetherimide fiber has an average fiber length in a range of 30 to 220 mm.

9. Use according to any one of claims 1 to 8, wherein the polyetherimide fiber is dyed with a disperse dye.

10. Use according to any one of claims 1 to 9, wherein the fire-protecting, waterproof, moisture-permeable sheet is produced by a method comprising the step of laminating at least one fiber sheet to a waterproof moisture-permeable film, wherein said fiber sheet and said waterproof moisture-permeable film are laminated directly or laminated using an adhesive,
wherein said method further comprises the step of adding a flame retardant to the waterproof, moisture-permeable film and/or to an interposed adhesive layer prior to the step of laminating.

11. Fireproof clothing comprising, as an interlayer, the fire-protecting, waterproof, moisture-permeable sheet as defined in any one of claims 1 to 9.

## Patentansprüche

1. Verwendung einer vor Feuer schützenden, wasserfesten, feuchtigkeitsdurchlässigen Lage als wasserfestes Zwischenlagengewebe in feuerfester Bekleidung, wobei die Lage ein Laminat aus mindestens einer Faserlage und einer wasserfesten, feuchtigkeitsdurchlässigen Folie ist, wobei die Faserlage ausgewählt ist aus der Gruppe bestehend aus Gewebe oder Gestrick, hergestellt aus Fasern, die gleichmäßig gemischt und versponnen wurden, um ein Garn zu ergeben, und einem gleichmäßig gemischten Vliesstoff, und 60 bis 95 Masse-% einer Polyetherimidfaser und 5 bis 40 Masse-% einer anderen flammhemmenden Faser aufweist;
wobei die Lage ferner eine antistatische Faser aufweist; und
wobei ein Flammhemmer in der wasserfesten, feuchtigkeitsdurchlässigen Folie oder in einer Klebstofflage bereitgestellt wird, die die wasserfeste, feuchtigkeitsdurchlässige Folie an die Faserlage laminiert;
wobei die vor Feuer schützende, wasserfeste, feuchtigkeitsdurchlässige Lage eine Flammbeständigkeit, Hitzebeständigkeit und Waschbeständigkeit gemäß ISO 11613-1999, den internationalen Leistungsstandards für feuerfeste Bekleidung, aufweist:
(1) Flammbeständigkeit ohne Lochbildung, nicht tropfend und schmelzend; und mit einer Nachbrennzeit und einer Nachglimmzeit von nicht mehr als 2 Sekunden;
(2) Hitzebeständigkeit ohne Brennen, Trennen, Tropfen und Schmelzen; und mit einer Einlaufrate von nicht mehr als 5 %; und
(3) Waschbeständigkeit mit einer Einlaufrate von nicht mehr als 3 %.

2. Verwendung nach Anspruch 1, wobei
die flammhemmende Faser mindestens eine Faser ist, ausgewählt aus der Gruppe bestehend aus Wolle, flammhemmendem Rayon, flammhemmendem Acryl, Aramid, flammhemmender Baumwolle und flammhemmendem Vinylon.

3. Verwendung nach Anspruch 1 oder 2, wobei es sich bei der antistatischen Faser um eine Metallfaser, eine Kohlenstofffaser oder um eine Faser handelt, in der Metallpartikel und Kohlenstoffpartikel gemischt sind.

4. Verwendung nach einem der Ansprüche 1 bis 3, wobei es sich bei der Faserlage entweder um ein Gewebe oder um ein Gestrick aus gesponnenem Garn handelt.

5. Verwendung nach einem der Ansprüche 1 bis 4, wobei die Faserlage und die wasserfeste, feuchtigkeitsdurchlässige Folie direkt oder mittels einer Klebstoffschicht laminiert sind.

6. Verwendung nach einem der Ansprüche 1 bis 5, wobei die wasserfeste, feuchtigkeitsdurchlässige Folie und/oder die Klebstoffschicht einen Flammhemmer aufweisen, bei dem es sich um einen auf Phosphor und Stickstoff basierenden Flammhemmer oder um einen auf Brom basierenden Flammhemmer handelt.

7. Verwendung nach einem der Ansprüche 1 bis 6, wobei die Polyetherimidfaser eine Feinheit von nicht mehr als 3,9 Decitex (3,5 Denier) aufweist.

8. Verwendung nach einem der Ansprüche 1 bis 7, wobei die Polyetherimidfaser eine durchschnittliche Faserlänge im Bereich von 30 bis 220 mm aufweist.

9. Verwendung nach einem der Ansprüche 1 bis 8, wobei die Polyetherimidfaser mit einem Dispersionsfarbstoff gefärbt wird.

10. Verwendung nach einem der Ansprüche 1 bis 9, wobei die vor Feuer schützende, wasserfeste, feuchtigkeitsdurchlässige Lage durch ein Verfahren hergestellt wird, das den Schritt zum Laminieren mindestens einer Faserlage auf eine wasserfeste, feuchtigkeitsdurchlässige Folie aufweist, wobei die Faserlage und die wasserfeste, feuchtigkeitsdurchlässige Folie direkt oder unter Verwendung eines Klebstoffs laminiert werden,
wobei das Verfahren ferner den Schritt zum Zugeben eines Flammhemmers zu der wasserfesten, feuchtigkeitsdurchlässigen Folie und/oder zu einer dazwischen angebrachten Klebstoffschicht vor dem Schritt zum Laminieren aufweist.

11. Feuerfeste Bekleidung, die als Zwischenschicht die vor Feuer schützende, wasserfeste, feuchtigkeitsdurchlässige Lage aufweist, wie in einem der Ansprüche 1 bis 9 definiert.

## Revendications

1. Utilisation d'une feuille pare-feu étanche à l'eau et imperméable à l'humidité comme tissu étanche à l'eau de couche intermédiaire dans des vêtements ignifuges, dans laquelle ladite feuille est un stratifié d'au moins une feuille de fibres et d'un film étanche à l'eau et perméable à l'humidité, la feuille de fibres étant choisie dans le groupe constitué d'un tissu tissé ou tricoté formé de fibres qui sont uniformément mélangées et filées pour former un fil, et d'un tissu non tissé uniformément mélangé, et comprenant 60 à 95 % en masse d'une fibre de polyétherimide et 5 à 40 % en masse d'une autre fibre retardatrice de flammes ;
dans laquelle la feuille comprend en outre une fibre antistatique ; et
dans laquelle un retardateur de flammes est disposé dans le film étanche à l'eau et perméable à l'humidité ou dans une feuille adhésive qui lamine le film étanche à l'eau perméable à l'humidité à la feuille de fibres ;
la feuille pare-feu étanche à l'eau et perméable à l'humidité ayant une résistance aux flammes, une résistance à la chaleur et une résistance au lavage répondant à la norme ISO 11613-1999 comme normes de performances internationales pour les vêtements ignifuges :
(1) résistance aux flammes pour être exempte de formation de trous, d'égouttement et de fusion ; et pour avoir un temps d'après flamme et un temps d'après incandescence de pas plus de 2 secondes :
(2) résistance à la chaleur pour être exempte d'une inflammation, d'une séparation, d'un égouttement et d'une fusion ; et pour avoir un taux de contraction de pas plus de 5 % ; et
(3) une résistance au lavage pour avoir un taux de contraction de pas plus de 3 %.

2. Utilisation selon la revendication 1, dans laquelle :
la fibre retardatrice de flammes est au moins une fibre choisie dans le groupe constitué de la laine, de la rayonne retardatrice de flammes, d'un acrylique retardateur de flammes, d'un aramide, d'un coton retardateur de flammes et de Vinylon retardateur de flammes.

3. Utilisation selon la revendication 1 ou 2, dans laquelle la fibre antistatique est une fibre métallique, une fibre de carbone ou une fibre dans laquelle des particules métalliques et des particules de carbone sont mélangées.

4. Utilisation selon l'une quelconque des revendications 1 à 3, dans laquelle la feuille de fibres est un tissu tissé ou un tissu tricoté d'un fil filé.

5. Utilisation selon l'une quelconque des revendications 1 à 4, dans laquelle la feuille de fibres et le film étanche à l'eau et perméable à l'humidité sont laminés directement ou via une couche adhésive.

6. Utilisation selon l'une quelconque des revendications 1 à 5, dans laquelle le film étanche à l'eau et perméable à l'humidité et/ou la couche adhésive comprend ou comprennent un retardateur de flammes qui est un retardateur de flammes à base de phosphore et d'azote ou un retardateur de flammes à base de brome.

7. Utilisation selon l'une quelconque des revendications 1 à 6, dans laquelle la fibre de polyétherimide a une finesse de pas plus de 3,9 décitex (3,5 deniers).

8. Utilisation selon l'une quelconque des revendications 1 à 7, dans laquelle la fibre de polyétherimide a une longueur de fibres moyenne dans la plage de 30 à 220 mm.

9. Utilisation selon l'une quelconque des revendications 1 à 8, dans laquelle la fibre de polyétherimide est colorée par un colorant de dispersion.

10. Utilisation selon l'une quelconque des revendications 1 à 9, dans laquelle la feuille pare-feu, étanche à l'eau et perméable à l'humidité est produite par un procédé comprenant l'étape de laminage d'au moins une feuille de fibres sur un film étanche à l'eau et perméable à l'humidité, dans laquelle ladite feuille de fibres et ledit film étanche à l'eau et perméable à l'humidité sont laminés directement ou laminés en utilisant un adhésif,
dans laquelle ledit procédé comprend en outre l'étape d'addition d'un retardateur de flammes au film étanche à l'eau et perméable à l'humidité et/ou à une couche d'adhésif intercalée avant l'étape de lamination.

11. Vêtements ignifuges comprenant, comme couche intermédiaire, la feuille pare-feu étanche à l'eau et perméable à l'humidité telle que définie dans l'une quelconque des revendications 1 à 9.
